(19) Europäisches Patentamt
European Patent Office
Office européen des brevets

(11) Publication number: **0 651 032 A1**

# (12) EUROPEAN PATENT APPLICATION

(21) Application number: **94116571.4**

(22) Date of filing: **20.10.94**

(51) Int. Cl.⁶: **C09C 3/08**, C08K 9/04, C07F 9/09

(30) Priority: **21.10.93 JP 263557/93**
**13.07.94 JP 161328/94**
**29.09.94 JP 235427/94**

(43) Date of publication of application:
**03.05.95 Bulletin 95/18**

(84) Designated Contracting States:
**BE CH DE FR GB IT LI**

(71) Applicant: **Ajinomoto Co., Inc.**
**No. 15-1, Kyobashi 1-chome**
**Chuo-ku**
**Tokyo (JP)**

(72) Inventor: **Tanaka, Hiroyuki c/o Central Research Lab**
**Ajinomoto C0, Inc**
**No 1-1, Suzuki-cho**
**Kawasaki-shi**
**Kanagawa-ken (JP)**
Inventor: **Chiba, Naoki c/o Central Research Lab**
**Ajinomoto C0, Inc**
**No 1-1, Suzuki-cho**
**Kawasaki-shi**
**Kanagawa-ken (JP)**

(74) Representative: **Strehl Schübel-Hopf Groening & Partner**
**Maximilianstrasse 54**
**D-80538 München (DE)**

## (54) Filler surface modifier.

(57) Herein disclosed are a filler surface modifier which comprises a phosphoric ester and/or pyrophosphoric ester having a substituent group with a terminal double bond, a filler treated with such a surface modifier, and an unsaturated polyester resin composition and an acrylic resin composition blended with such a surface-treated filler. Such a filler surface modifier eventually not only can increase strength of, namely, provide rigidity for, unsaturated polyester resins filled with $CaCO_3$ and the like fillers and acrylic resins filled with $Al(OH)_3$ and the like fillers, but also can reduce viscosity of such resins before curing, thus resulting in improved processability and high filling capacity.

EP 0 651 032 A1

## BACKGROUND OF THE INVENTION

### Field of the Invention:

This invention relates to a surface modifier which can improve processability and rigidity of filler-filled unsaturated polyesters and filler-filled acrylic resins.

### Discussion of the Background:

Titanate-based, aluminium-based, silane-based, phosphoric acid-based, and the like surface modifier have been used as an additive to the system of an inorganic filler and an organic matrix. Of these, the titanate-, aluminium-, and phosphoric acid-based surface modifiers are mainly used as a viscosity reducing agent and a high filling agent with a view to improving pre-curing workability, and the silane-based one is used as a rigidity providing agent in order to improve physical properties after curing. With respect to thermosetting resins as the organic matrix, however, there have been known no applicable surface modifiers which have simultaneously the required characteristics of both kinds of surface modifiers. Actually, there are many systems including unsaturated polyesters which systems require viscosity reduction and rigidity provision. Phosphoric acid-based surface modifiers have been disclosed in Japanese Patent Application Laid-Open (Kokai) No. Sho 57-108164, Japanese Patent Application Laid-Open (Kokai) No. Sho 59-170131 and Japanese Patent Application Laid-Open (Kokai) No. Hei 3-103413, but they were not satisfactory in terms of the reduction of viscosity and provision of strength (rigidity) in organic matrices.

## SUMMARY OF THE INVENTION

Accordingly, an object of the present invention is to provide a surface modifier which can show a viscosity reducing effect when a filler is filled in thermosetting resins, especially unsaturated polyester resins and acrylic resins, and also can provide the resulting moldings with rigidity.

The present invention thus provides filler surface modifiers which satisfy the above object of the invention and other objects which will become apparent from the description of the invention given hereinbelow.

In an aspect of the present invention, there is provided a filler surface modifier which comprises phosphoric esters and/or pyrophosphoric esters having substituent groups with a terminal double bond.

In another aspect of the present invention, there is provided a filler surface-treated with such a surface modifier.

In a third aspect of the present invention, there is provided an unsaturated polyester resin composition or an acrylic resin composition, each blended with such a surface-treated filler.

And, in a fourth aspect of the invention, there are provided some novel compounds which can be used as an active ingredient of the filler surface modifier.

## DETALED DESCRIPTION OF THE INVENTION

With the aim of achieving the above objects, the inventors of the present invention have conducted intensive studies and found that the above object can be achieved by a certain phosphorus compounds having a double bond at their terminal, and have accomplished the present invention on the basis of these findings.

Accordingly, the present invention first relates to a filler surface modifier which comprises as an active ingredient at least one compound selected from (1) a phosphoric ester compound having groups represented by the following general formulae (I) and (III) in one molecule, (2) a phosphoric ester compound having groups represented by the following general formulae (II) and (III) in one molecule, (3) a pyrophosphoric ester compound having groups represented by the following general formulae (I) and (III) in one molecule, (4) a pyrophosphoric ester compound having groups represented by the following general formulae (II) and (III) in one molecule, (5) a pyrophosphoric ester compound having groups represented by the following general formulae (I) and (IV) in one molecule, (6) a pyrophosphoric ester compound having groups represented by the following general formulae (II) and (IV) in one molecule, (7) a phosphoric ester compound having groups represented by the following general formulae (I) and (IV) in one molecule and 2 phosphorus atoms in the molecule, and (8) a phosphoric ester compound having groups represented by the following general formulae (II) and (IV) in one molecule and 2 phosphorus atoms in the molecule:

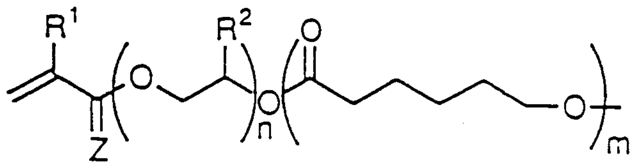

( I )

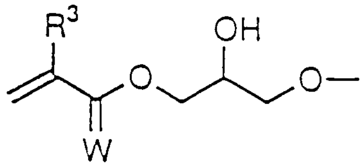

( I I )

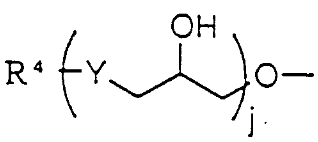

( I I I )

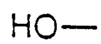

( I V)

wherein each of $R^1$ and $R^2$ independently represents H or $CH_3$, $R^3$ represents H or $CH_3$, $R^4$ represents an aryl group or a straight chain or branched chain alkyl group having 1 to 20 carbon atoms, Z represents O or $H_2$, W represents O or $H_2$, Y represents O, $CO_2$ or $CH_2$, n is an integer of 0 to 20, m is an integer of 0 to 10 and j is 0 or 1, with the proviso that n = 1 - 20 when Z is O and m = 0, n = 1 when Z is O and m = 1 - 10, n = 0 - 20 when Z is $H_2$ and m = 0, and n = 0 when Z is $H_2$ and m = 1 - 10.

Particularly, it relates to filler surface modifiers in respect of which the above phosphoric ester compounds (1) and (2) are compounds represented by the following general formula (A), the above pyrophosphoric ester compounds (3) to (6) are compounds represented by the following general formula (B), and the above phosphoric ester compounds (1), (2), (7) and (8) are compounds represented by the following general formula (C):

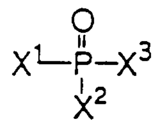

(A)

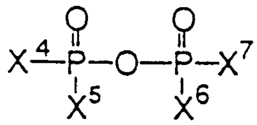

(B)

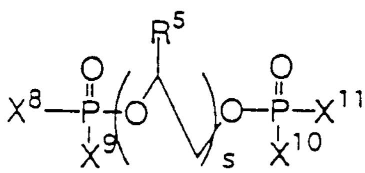

(C)

wherein $R^5$ represents H or $CH_3$, s is an integer of 1 to 20 and each of $X^1$ to $X^{11}$ independently represents any one of the groups represented by the aforementioned general formulae (I), (II), (III) and (IV).

According to the present invention, phosphoric ester compounds and pyrophosphoric ester compounds are discriminated one from the other, and pyrophosphoric ester compounds are not among the phosphoric ester compounds accordingly.

Secondly, the present invention relates to a filler in respect of which the surfaces have been surface-treated with 0.1 to 20% by weight of any one of the aforementioned filler surface modifiers.

Thirdly, the present invention also relates to an unsaturated polyester resin composition which is obtained by blending 30 to 250 weight parts of the thus surface-treated filler with 100 weight parts of an unsaturated polyester and 0.5 to 5 weight parts of a curing catalyst, as well as to an acrylic resin composition which is obtained by blending 30 to 250 weight parts of the above surface-treated filler with 100 weight parts of an acrylic resin and 0.5 to 5 weight parts of a curing catalyst.

The phosphoric ester compounds of the present invention contain at least groups represented by the aforementioned general formulae (I) and (III) or (II) and (III) in one molecule, the pyrophosphoric ester compounds contain at least groups represented by the aforementioned general formulae (I) and (III), (II) and (III), (I) and (IV) or (II) and (IV) in one molecule, and the phosphoric ester compounds having 2 phosphorus atoms in one molecule contain at least groups represented by the aforementioned general formulae (I) and (IV) or (II) and (IV) in the molecule.

Illustrative examples of the combination of $X^1$ to $X^3$ in a phosphoric ester compound represented by the aforementioned general formula (A) include (I, I, III), (I, II, III), (I, III, III), (I, III, IV), (II, II, III), (II, III, III) and (II, III, IV). In this instance, I, II and III represent the aforementioned general formulae (I), (II) and (III), respectively.

Illustrative examples of the combination of $X^4$ to $X^7$ in a pyrophosphoric ester compound represented by the aforementioned general formula (B) include (I, I, I, III), (I, I, I, IV), (I, I, II, III), (I, I, II, IV), (I, I, III, III), (I, I, III, IV), (I, I, IV, IV), (I, II, II, III), (I, II, II, IV), (I, II, III, III), (I, II, III, IV), (I, II, IV, IV), (I, III, III, III), (I, III, III, IV), (I, III, IV, IV), (I, IV, IV, IV), (II, II, II, III), (II, II, II, IV), (II, II, III, III), (II, II, III, IV), (II, II, IV, IV), (II, III, III, III), (II, III, III, IV), (II, III, IV, IV) and (II, IV, IV, IV).

Combinations of $X^8$ to $X^{11}$ in a phosphoric ester compound represented by the aforementioned general formula (C) are the same as those of $X^4$ to $X^7$.

Of the above combinations, compounds having a combination of (I, III, IV) or (II, III, IV) are highly effective and therefore particularly preferred as the phosphoric ester compound, and compounds having a combination of (I, I, III, IV), (I, II, III, IV) or (II, II, III, IV), as the pyrophosphoric ester compound or the phosphoric ester compound having 2 phosphorus atoms in one molecule.

Illustrative examples of the groups represented by the aforementioned general formula (I) include an acryloyloxyethyloxy group, a methacryloyloxyethyloxy group, an allyloxyethyloxy group, a 2-acryloyloxy-1-methyloxy group, a 2-methacryloyloxy-1-methyloxy group, a 2-allyloxy-1-methyloxy group, a monoacryloyloxypolyethylene glycol group, a monomethacryloyloxypolyethylene glycol group, a monoallyloxypolyethylene glycol group, a monoacryloyloxypropylene glycol group, a monomethacryloyloxypropylene glycol group, a monoallyloxypropylene glycol group, an acryloyloxyethyloxypolycaprolactoxy group, a methacryloyloxyethyloxypolycaprolactoxy group, an allyl group, a 2-methylallyl group, a monoallyloxypolyethylene glycol group, an allyloxypolycaprolactoxy group and the like.

Illustrative examples of the groups represented by the aforementioned general formula (II) include a 2-hydroxy-3-methacryloyloxy-propyloxy group, a 3-acryloyloxy-2-hydroxypropyloxy group, a 3-allyloxy-2-hydroxypropyloxy group, a 2-hydroxy-3-(2-methyl)allyloxy-2-propyloxy group and the like.

Illustrative examples of the groups represented by the aforementioned general formula (III) include a phenoxy group, a cresyloxy group, a methoxy group, an ethoxy group, a propoxy group, an isopropoxy group, a butoxy group, a 2-ethylhexyloxy group, a 2-ethyloctyloxy group, a 2-hydroxy-3-phenyloxy-propyloxy group, a 3-cresyloxy-2-hydroxy-propyloxy group, a 2-hydroxy-4-phenyl-butyloxy group, a 2-hydroxy-3-octyloxy-propyloxy group, a 2-hydroxy-3-octanoyl-propyloxy group, a 3-(2-ethyl)hexyloxy-2-hydroxy-2-propyloxy group, a 3-(2-ethyl)octyloxy-2-hydroxy-propyloxy group, a 3-cresyloxy-2-hydroxy-propyloxy group, a 2-hydroxyalkyloxy group and the like.

Fourthly, the present invention relates to a process for the production of the aforementioned phosphoric ester compounds and pyrophosphoric ester compounds. In this instance, methods per se to be employed in the production process can be based on known methods. Fifthly, the present invention also relates to novel compounds per se which are members of the aforementioned phosphoric ester compounds and pyrophosphoric ester compounds as active ingredients of present invention, and are represented by the general formulae (Aa) and (Ba).

For example, the aforementioned phosphoric ester compound (A) of the present invention can be obtained by allowing 1 mole of phosphorus oxychloride to react with q moles of water, p moles of a compound represented by the following general formula (D) and (3 - p - q) moles of a compound represented by the following general formula (E), followed by reaction with r moles of a compound represented by the following general formula (F) (provided that p, q and r respectively satisfy $0 < p \leqq 3$, $0 \leqq q < 3$, $0 < p + q \leqq 3$ and $0 \leqq r \leqq q$):

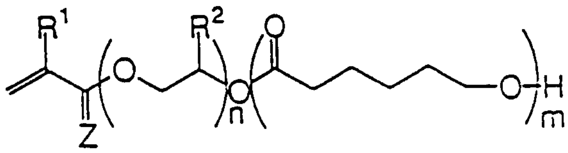

(D)

$R^6OH$ (E)

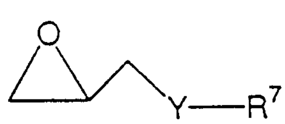

(F)

wherein each of $R^1$ and $R^2$ independently represents H or $CH_3$, Z represents O or $H_2$, n is an integer of 0 to 20, m is an integer of 0 to 10, $R^6$ represents an aryl group, a straight or branched chain alkyl group having 1 to 20 carbon atoms, a 3-alkoxy-2-hydroxypropyl group or a 3-allyloxy-2-hydroxypropyl group, $R^7$ represents a straight or branched chain alkyl group having 1 to 20 carbon atoms, an aryl group, an allyl group, a 2-methylallyl group, a methacryloyl group or an acryloyl group, and Y represents O, $CH_2$ or OCO, with the proviso that n = 1 - 20 when Z is O and m = 0, n = 1 when Z is O and m = 1 - 10, n = 0 - 20 when Z is $H_2$ and m = 0, and n = 0 when Z is $H_2$ and m = 1 - 10, and $R^7$ is none of allyl, 2-methylallyl, methacryloyl and acryloyl groups when Y is $CH_2$ or OCO.

The aforementioned pyrophosphoric ester compound (B) of the present invention can be obtained by allowing 1 mole of phosphorus pentoxide to react with u moles of a compound represented by the following general formula (D) and (2 - u) moles of a compound represented by the following general formula (E), followed by reaction with v moles of a compound represented by the following general formula (F) (provided that u and v respectively satisfy $0 < u \leq 2$ and $0 \leq v \leq 2$), or by mixing a reaction product obtained by allowing 1 mole of phosphorus oxychloride to react with (3 - a - b - c) moles of water ($H_2O$), a moles of a compound represented by the following general formula (D), b moles of a compound represented by the following general formula (E) and c moles of a compound represented by the following general formula (H), and a reaction product obtained by allowing 1 mole of phosphorus oxychloride to react with (3 - d - e - f) moles of water ($H_2O$), d moles of a compound represented by the following general formula (D), e moles of a compound represented by the following general formula (E) and f moles of a compound represented by the following general formula (H), followed by removal of 1 mol of water ($H_2O$) using a dehydrating agent (provided that a to f respectively satisfy $1 \leq a + b + c \leq 2$, $0 < a + d \leq 2$, $1 \leq d + e + f \leq 2$, $0 \leq b < 2$, $0 \leq c < 2$, $0 \leq d < 2$ and $0 \leq f < 2$):

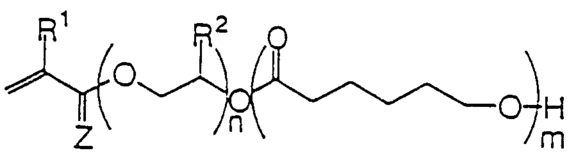

(D)

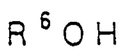

(E)

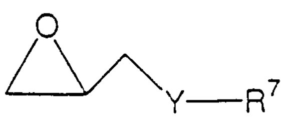

(F)

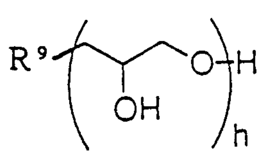

(H)

wherein each of $R^1$ and $R^2$ independently represents H or $CH_3$, Z represents O or $H_2$, n is an integer of 0 to 20, m is an integer of 0 to 10, $R^6$ represents an aryl group, a straight or branched chain alkyl group having 1 to 20 carbon atoms, a 3-alkoxy-2-hydroxypropyl group or a 3-allyloxy-2-hydroxypropyl group, $R^7$ represents a straight or branched chain alkyl group having 1 to 20 carbon atoms, an aryl group, an allyl

group, a 2-methylallyl group, a methacryloyl group or an acryloyl group, Y represents O, $CH_2$ or OCO, $R^9$ represents a straight or branched chain alkyloxy group having 1 to 20 carbon atoms, an aryloxy group, an allyloxy group, a 2-methylallyl group, a methacryloyl group or an acryloyl group, and h is 0 or 1, with the proviso that n = 1 - 20 when Z is O and m = 0, n = 1 when Z is O and m = 1 - 10, n = 0 - 20 when Z is $H_2$ and m = 0, and n = 0 when Z is $H_2$ and m = 1 - 10, and $R^7$ is none of allyl, 2-methylallyl, methacryloyl and acryloyl groups when Y is $CH_2$ or OCO.

The dehydrating agents are not particularly limited, provided that they are used in this field. The examples including N,N'-dicyclohexylcarbodiimide, N-cyclohexyl-N'-(2-[N-morpholinoethyl])carbodiimide, N-cyclohexyl-N'-4-diethylaminohexylcarbodiimide and the like.

Also, the aforementioned phosphoric ester compound (C) of the present invention can be obtained by allowing 1 mole of phosphorus oxychloride to react with y moles of water, x moles of a compound represented by the following general formula (D), (2 - x - y) moles of a compound represented by the following general formula (E) and 0.5 moles of ethylene glycol, propylene glycol, polyethylene glycol or polypropylene glycol represented by the following general formula (G), followed by reaction with z moles of a compound represented by the following general formula (F) (provided that x, y and z respectively satisfy $0 < x \leqq 2$, $0 \leqq y < 2$, $0 < x + y \leqq 2$ and $0 \leqq z \leqq y$):

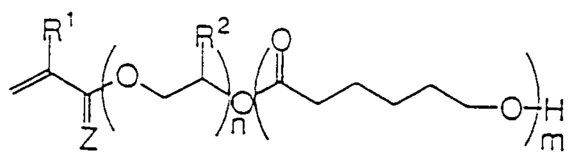

(D)

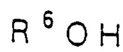

(E)

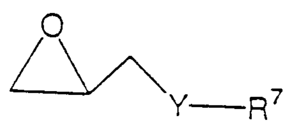

(F)

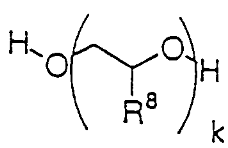

(G)

wherein each of $R^1$ and $R^2$ independently represents H or $CH_3$, Z represents O or $H_2$, n is an integer of 0 to 20, m is an integer of 0 to 10, $R^6$ represents an aryl group, a straight or branched chain alkyl group having 1 to 20 carbon atoms, a 3-alkoxy-2-hydroxypropyl group or a 3-allyloxy-2-hydroxypropyl group, $R^7$ represents a straight or branched chain alkyl group having 1 to 20 carbon atoms, an aryl group, an allyl group, a 2-methylallyl group, a methacryloyl group or an acryloyl group, Y represents O, $CH_2$ or OCO, $R^8$ represents H or $CH_3$, and k is an integer of 1 to 20, with the proviso that n = 1 - 20 when Z is O and m = 0, n = 1 when Z is O and m = 1 - 10, n = 0 - 20 when Z is $H_2$ and m = 0 and n = 0 when Z is $H_2$ and m = 1 - 10, and $R^7$ is none of allyl, 2-methylallyl, methacryloyl and acryloyl groups when Y is $CH_2$ or OCO.

In addition to the above, various synthetic methods so far known may also be used.

Examples of the compounds represented by the aforementioned general formula (D) include allyl alcohol, 2-methylallyl alcohol and the like.

Also there may be mentioned a monoester of acrylic acid or methacrylic acid with ethylene glycol, propylene glycol, a polyethylene glycol such as diethylene glycol, triethylene glycol or the like or a polypropylene glycol such as dipropylene glycol, tripropylene glycol or the like. The illustrative examples

include 2-hydroxyethyl acrylate, 2-hydroxyethyl methacrylate, polyethylene glycol monoacrylate, polypropylene glycol monoacrylate, polyethylene glycol monomethacrylate, polypropylene glycol monomethacrylate and the like.

There may be further mentioned a reaction product obtained by allowing 1 mole of a monoester of acrylic acid or methacrylic acid with ethylene glycol or propylene glycol to react with 1 to 10 moles of $\epsilon$-caprolactone. The illustrative examples include caprolactone modified 2-hydroxyethyl methacrylate ("Plakcel" FM series, manufactured by Daicel Chemical Industries), caprolactone modified 2-hydroxyethyl acrylate ("Plakcel" FA series, manufactured by Daicel Chemical Industries) and the like.

There may be additionally mentioned a monoether condensate of allyl alcohol or 2-methylallyl alcohol with ethylene glycol, propylene glycol, polyethylene glycol such as diethylene glycol, triethylene glycol or the like or polypropylene glycol such as dipropylene glycol, tripropylene glycol or the like. The illustrative examples include ethylene glycol monoallyl ether, propylene glycol monoallyl ether, polyethylene glycol monoallyl ether, polypropylene glycol monoallyl ether and the like.

In addition to the above, a reaction product obtained by allowing 1 mole of allyl alcohol or 2-methylallyl alcohol to react with 1 to 10 moles of $\epsilon$-caprolactone, such as allyl polycaprolactate or the like, may also be used.

Though not particularly limited, examples of the compounds represented by the aforementioned general formula (E) include aromatic alcohols such as phenol, cresol, xylenol and the like, alkyl alcohols such as methanol, ethanol, propanol, butanol, stearyl alcohol and the like, and glycerol derivatives such as 3-butyloxy-1,2-propanediol, 3-(2-ethylhexyloxy)-1,2-propanediol, 3-alkoxy($C_{12}$ - $C_{14}$)-1,2-propanediol, 3-cresyloxy-1,2-propanediol, 3-phenoxy-1,2-propanediol and the like.

The compounds represented by the aforementioned general formula (F) are epoxy compounds which have an aryl group, an aryloxyl group, a straight or branched chain alkyl group or a straight or branched chain alkoxyl group, and, though not particularly limited, the illustrative examples include 2-ethylhexyl glycidyl ether, cresyl glycidyl ether, nonylphenyl glycidyl ether, ethylphenyl glycidyl ether, phenyl glycidyl ether, t-butyl glycidyl ether, allyl glycidyl ether, alkyl($C_{12}$and $C_{13}$ mixture) glycidyl ether, glycidyl methacrylate, glycidyl acrylate, octanoic acid glycidyl ether and the like.

Though not particularly limited, examples of the compounds represented by the aforementioned general formula (G) include ethylene glycol, propylene glycol, polyethylene glycols such as diethylene glycol, triethylene glycol and more higher ethylene glycols, and polypropylene glycols such as dipropylene glycol, tripropylene glycol or more higher propylene glycols.

Though not particularly limited, examples of the compounds represented by the aforementioned general formula (H) include aromatic alcohols such as phenol, cresol, xylenol and the like, alkyl alcohols such as methanol, ethanol, propanol, butanol, stearyl alcohol and the like, and glycerol derivatives such as 3-butyloxy-1,2-propanediol, 3-(2-ethylhexyloxy)-1,2-propanediol, 3-alkoxy($C_{12}$ - $C_{14}$)-1,2-propanediol, 3-cresyloxy-1,2-propanediol, 3-phenoxy-1,2-propanediol, 3-allyloxy-1,2-propanediol, 3-acryloyloxy-1,2-propanediol, 3-methacryloyloxy-1,2-propanediol and the like, as well as allyl alcohol, 2-methylallyl alcohol and the like.

The reaction in the aforementioned production process may be carried out at 0 to 100 °C, but preferably at 20 to 70 °C. Also, the reaction may be completed after a reaction period of 0.5 to 24 hours.

Though not particularly limited, examples of the fillers to be surface-modified according to the present invention include carbonates such as calcium carbonate, strontium carbonate and the like, metals such as iron, zinc, copper, nickel, silver and the like, metal oxides such as aluminium oxide, titanium oxide, iron oxide, zinc oxide and the like, and metal hydroxides such as aluminium hydroxide, magnesium hydroxide and the like.

With regard to the shape of such fillers, it is of sphere, rod, plate, needle or the like, and with no restriction on the shape of a filler when surface-modified. Also, the aforementioned fillers may be used alone or as a mixture of two or more. Particle size of the fillers also has no particular limitation, but 1 mm or less in particle size may be effective especially in terms of rigidity.

Treatment of the surface of fillers with a surface modifier of the present invention may be effected by commonly used means such as a dry method in which a Henschel mixer or the like is used, a wet solvent method in which the treatment is carried out in a solvent which is subsequently removed, or an integral blend method in which a treating agent is added when a resin and a filler are kneaded. Though not particularly limited, examples of the solvents to be used in the solvent method include aromatic solvents such as toluene, xylene and the like, aliphatic solvents such as hexane, heptane and the like, alcohol solvents such as isopropanol, butanol and the like, ether solvents such as ethyl cellosolve, butyl cellosolve and the like, ester solvents such as ethyl acetate, butyl acetate and the like, and ketone solvents such as acetone, MEK and the like. The amount of the surface modifier to be added (used) depends on the shape,

particle size and the like of each filler, and it may be in the range of from 0.1 to 20% by weight based on the filler, because smaller than 0.1% by weight or larger than 20% by weight may have inferior effects.

Examples of the resins to be used for the resin compositions of the present invention include unsaturated polyesters and acrylic resins, but other double bond-containing resins such as allyl resin, polyethylene, polypropylene, polybutadiene and the like may also be used.

When a surface-treated filler is filled in an unsaturated polyester, the surface-treated filler may be used in an amount of from 30 to 300 weight parts based on 100 weight parts of the resin, because smaller than 30% by weight or larger than 300 weight parts may show only an effect similar to that the same filler which is treated with a conventional surface modifier does.

When a surface-treated filler is filled in an acrylic resin, the surface-treated filler may be used similarly in an amount of from 30 to 300 weight parts based on 100 weight parts of the resin, because smaller than 30% by weight or larger than 300 weight parts may show only an effect similar to that the same filler which is treated with a conventional surface modifier does.

The curing catalyst also has no particular limitation, and any of those which are usually used in this field may be used. The examples include ketone peroxides such as ethyl methyl ketone peroxide and the like, diacyl peroxides such as benzoyl peroxide and the like, peroxy dicarbonates such as diisopropylperoxy dicarbonate and the like, peroxy ketals such as 1,1-bis(t-butylperoxy)cyclohexane and the like, hydroperoxides such as t-butylhydroperoxide and the like, and peroxy esters such as t-butylperoxy pivalate and the like as well as azobisisobutyronitrile, hydrogen peroxide, ferrous salt and the like.

Effects

It is considered that the surface modifier of the present invention produces a viscosity reducing effect through the binding of hydroxyl groups or alkoxyl groups in the phosphorus compound to the surface of a filler by certain mechanism and through the improved wettability with the resin matrix by the side chain moiety of the compound, and that it also provides rigidity through its reaction with the resin after curing.

Examples

The following examples are provided to further illustrate the present invention. It is to be understood, however, that the examples are for purpose of illustration only and are not intended as the limits of the present invention.

Synthesis Example 1

2-Hydroxyethyl methacrylate (manufactured by Junsei Kagaku) was allowed to react with 1 mole of phosphorus pentoxide ($P_2O_5$,manufactured by Junsei Kagaku) per 2 moles of the methacrylate, and then with 1 mole of 2-ethylhexyl glycidyl ether ("HELOXY 116", manufactured by ACI) per 2 moles of the methacrylate, to obtain a liquid phosphorus compound (P-1: 1,3-bis(2-methacryloxyethyl)-1-[3-(2-ethylhexyloxy)-2-hydroxypropyl] hydrogen diphosphate) having the below-shown structural formula.

In this instance, the reaction temperature in Synthesis Example 1 was 25°C, and reactions in the following synthesis examples were also carried out at 25°C.

Analytical data: NMR ($CDCl_3$, δ); 0.88 ppm (m, 6H), 1.29 ppm (m, 9H), 1.96 ppm (s, 6H), 3.25 - 3.90 ppm (m, 5H), 4.20 - 4.40 ppm (m, 10H), 5.61 ppm (s, 2H), 6.18 ppm (s, 2H), 6.95 ppm (s, 2H).

IR (film) ν max; 1020 $cm^{-1}$, 1170 $cm^{-1}$, 1720 $cm^{-1}$, 2950 $cm^{-1}$.

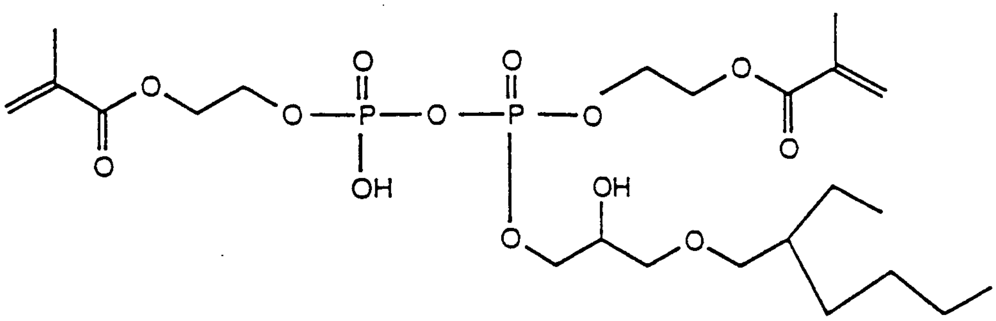

(P-1)

Synthesis Example 2

Polyethylene glycol monomethacrylate ("Blenmer PE-200" manufactured by Nippon Oil & Fats; mean polyethylene glycol number, 4) was allowed to react with 1 mole of phosphorus pentoxide ($P_2O_5$, manufactured by Junsei Kagaku) per 2 moles of the monomethacrylate, and then with 1 mole of cresyl glycidyl ether ("HELOXY 62", manufactured by ACI) per 2 moles of the monomethacrylate, to obtain a liquid phosphorus compound (P-2: 1,3-bis[2-methacryloxypolyethyleneglycolethyl)-1-[3-(2-methylphenoxy)-2-hydroxypropyl] hydrogen diphosphate; mean polyethylene glycol number, 4) having the below-shown structural formula.

Analytical data: NMR ($CDCl_3$, $\delta$); 1.95 ppm (s, 6H), 2.21 ppm (s, 3H), 3.55 - 3.78 ppm (m, 27H), 4.15 - 4.36 ppm (m, 10H), 5.58 ppm (s, 2H), 6.12 ppm (s, 2H), 6.78 - 6.92 ppm (m, 2H), 7.02 - 7.18 ppm (m, 2H), 8.48 ppm (s, 2H).

IR (film) $\nu$ max; 1020 $cm^{-1}$, 1170 $cm^{-1}$, 1450 $cm^{-1}$, 1720 $cm^{-1}$, 2950 $cm^{-1}$.

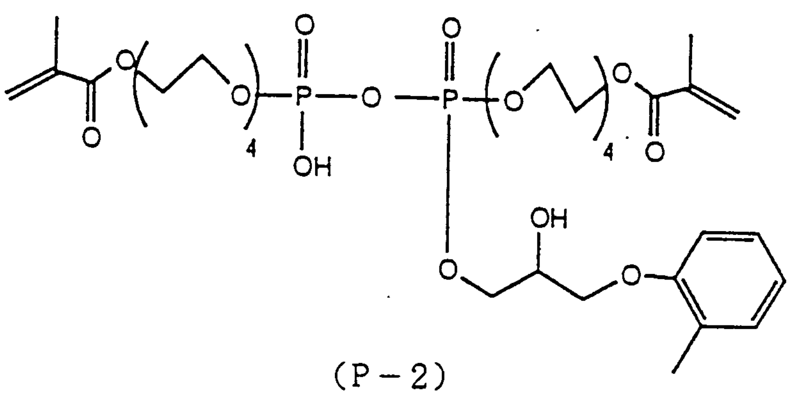

(P-2)

Synthesis Example 3

Polypropylene glycol monomethacrylate ("Blenmer PP-1000" manufactured by Nippon Oil & Fats; mean polyethylene glycol number, 5) was allowed to react with 1 mole of phosphorus pentoxide ($P_2O_5$, manufactured by Junsei Kagaku) per 2 moles of the monomethacrylate, and then with 1 mole of alkyl ($C_{12}$ - $C_{13}$) glycidyl ether ("HELOXY 9", manufactured by ACI) per 2 moles of the monomethacrylate, to obtain a liquid phosphorus compound (P-3: 1,3-bis(2-methacryloxypolypropyleneglycolethyl)-1-[3-{alkoxy($C_{12}$ - $C_{13}$)-}-2-hydroxypropyl] hydrogen diphosphate) having the below-shown structural formula.

Analytical data: NMR ($CDCl_3$, $\delta$); 0.88 ppm (m, 3H), 1.11 ppm (m, 30H), 1.29 ppm (m, 20 - 22H), 1.93 ppm (s, 6H), 3.23 - 3.90 ppm (m, 29H), 4.15 - 4.40 ppm (m, 8H), 5.58 ppm (s, 2H), 6.12 ppm (s, 2H), 8.48 ppm (s, 2H).

IR (film) $\nu$ max; 900 $cm^{-1}$, 1020 $cm^{-1}$, 1170 $cm^{-1}$, 1720 $cm^{-1}$, 2950 $cm^{-1}$.

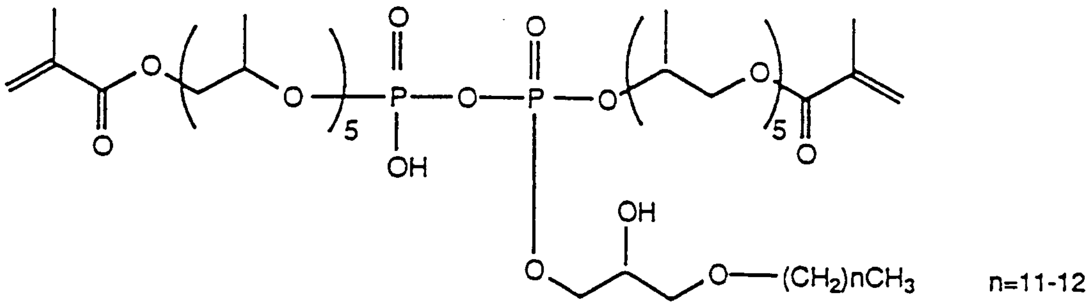

(P-3)

Synthesis Example 4

Phosphorus oxychloride (manufactured by Junsei Kagaku) was allowed to react with 2 moles of 2-hydroxyethyl acrylate (manufactured by Junsei Kagaku) per 2 moles of the oxychloride, followed by reaction with 2 moles of water per 2 moles of the oxychloride, and subsequent final reaction with 1 mole of ethylene glycol per 2 moles of the oxychloride, to obtain a liquid phosphorus compound (P-4) having the following structural formula.

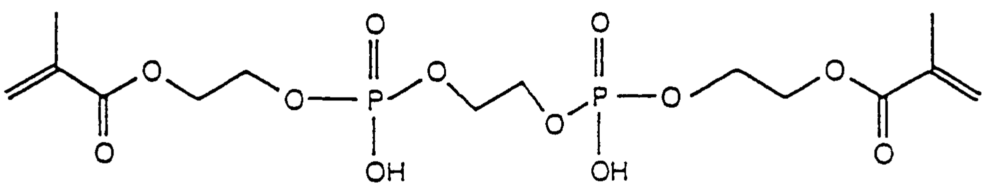

(P-4)

Synthesis Example 5

2-Ethylhexyl alcohol (manufactured by Junsei Kagaku) was allowed to react with 1 mole of phosphorus pentoxide (manufactured by Junsei Kagaku) per 2 moles of the alcohol, and then with 1 mole of glycidyl methacrylate (manufactured by Junsei Kagaku) per 2 moles of the alcohol, to obtain a liquid phosphorus compound (P-5: 1,3-bis(2-ethylhexyl)-1-[3-(2-methacryloxyethyloxy)-2-hydroxypropyl] hydrogen diphosphate) having the following structural formula.

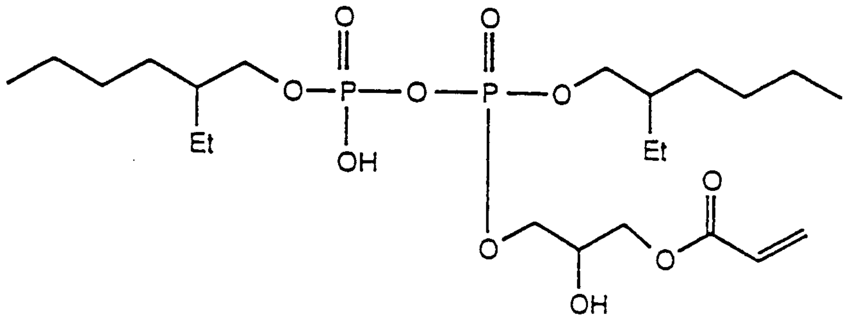

(P-5)

Synthesis Example 6

m-Cresol (manufactured by Junsei Kagaku) was allowed to react with 1 mole of phosphorus pentoxide (manufactured by Junsei Kagaku) per 2 moles of the cresol, and then with 1 mole of glycidyl methacrylate (manufactured by Junsei Kagaku) per 2 moles of the cresol, to obtain a liquid phosphorus compound (P-6: 1,3-bis(2-methylphenyl)-1-[3-(2-methacryloxyethyloxy)-2-hydroxypropyl] hydrogen diphosphate) having the following structural formula.

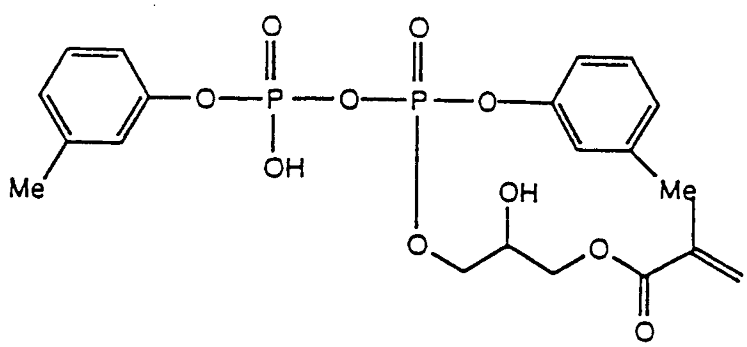

(P-6)

Synthesis Example 7

2-Hydroxyethyl methacrylate (manufactured by Junsei Kagaku) was allowed to react with 1 mole of phosphorus pentoxide (manufactured by Junsei Kagaku) per 2 moles of the methacrylate, and then with 1.5 moles of cresyl glycidyl ether ("HELOXY 62", manufactured by ACI) per 2 moles of the methacrylate, to obtain a liquid mixture of the phosphorus compounds (P-7) having the below-shown structural formulae.

Analytical data: NMR ($CDCl_3$, $\delta$); 1.95 ppm (s, 12H), 2.21 ppm (s, 9H), 3.55 - 3.78 ppm (m, 3H), 4.15 - 4.36 ppm (m, 28H), 5.58 ppm (s, 4H), 6.12 ppm (s, 4H), 6.78 - 6.92 ppm (m, 6H), 7.02 - 7.18 ppm (m, 6H), 8.28 ppm (s, 4H).

IR (film) $\nu$ max; 1020 $cm^{-1}$, 1170 $cm^{-1}$, 1250 $cm^{-1}$, 1500 $cm^{-1}$, 1720 $cm^{-1}$, 2950 $cm^{-1}$.

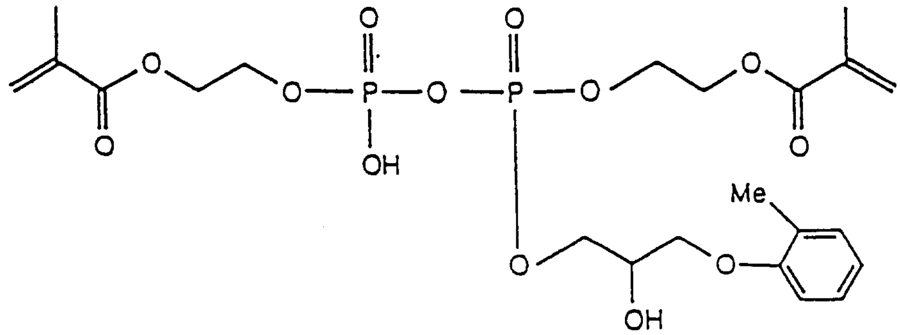

+

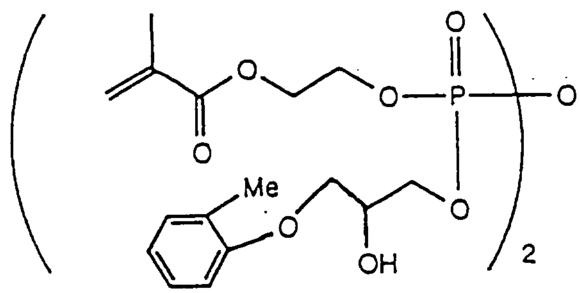

(P-7)

Synthesis Example 8

An acidic phosphoric ester ("KAYAMER PM-1" manufactured by Nippon Kayaku; (2-methacryloxyethyl)-hydrogen diphosphate) was allowed to react with 1 mole of 2-ethylhexyl glycidyl ether ("HELOXY 116", manufactured by ACI) per 1 mole of the ester, to obtain a liquid phosphorus compound (P-8: (2-acryloxyethyl)-[3-(2-ethylhexyloxy)-2-hydroxypropyl] hydrogen diphosphate) having the below-shown structural formula.

Analytical data: NMR ($CDCl_3$, $\delta$); 0.88 ppm (m, 6H), 1.29 ppm (m, 9H), 3.25 - 3.90 ppm (m, 5H), 4.20 - 4.40 ppm (m, 6H), 5.82 - 5.89 ppm (d, 1H), 6.10 - 6.22 ppm (t, 1H), 6.40 - 6.50 ppm (d, 1H).

IR (film) $\nu$ max; 1020 $cm^{-1}$, 1170 $cm^{-1}$, 1460 $cm^{-1}$, 1730 $cm^{-1}$, 2950 $cm^{-1}$.

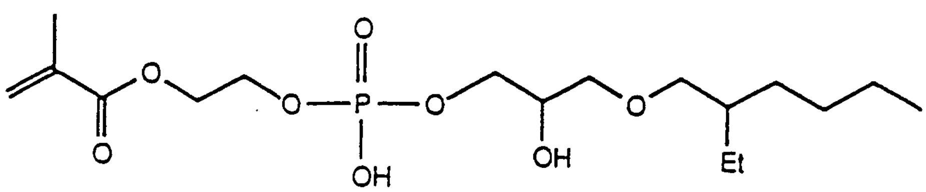

(P-8)

Synthesis Example 9

2-Ethylhexyl alcohol (manufactured by Junsei Kagaku) was allowed to react with 1 mole of water and 1 mole of phosphorus oxychloride (manufactured by Junsei Kagaku) per 1 mole of the alcohol, and then with 1 mole of 2-hydroxyethyl acrylate (manufactured by Junsei Kagaku) per 1 mole of the alcohol, obtain a phosphorus compound (P-9: (2-acryloxyethyl)-(2-ethylhexyl) hydrogen diphosphate) having the following

structural formula.

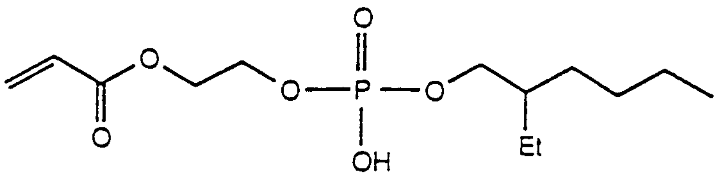

(P-9)

Synthesis Example 10

A reaction product obtained by allowing phosphorus oxychloride (manufactured by Junsei Kagaku) to react with 2 moles of water per 1 mole of the oxychloride, and then with 1 mole of 2-hydroxyethyl acrylate (manufactured by Junsei Kagaku) per 1 mole of the oxychloride, and another reaction product obtained by allowing phosphorus oxychloride (manufactured by Junsei Kagaku) to react with 1 mole of isostearyl alcohol (manufactured by Junsei Kagaku) per 1 mole of the oxychloride, and then with 2 moles of water per 1 mole of the oxychloride were mixed, and the resulting mixture was subjected to dehydration in the presence of an amine to remove 1 mole of water per 1 mole of the oxychloride, thereby obtaining a liquid phosphorus compound (P-10: 1-(2-acryloxyethyl)-3-(isostearyl) dihydrogen diphosphate having the following structural formula.

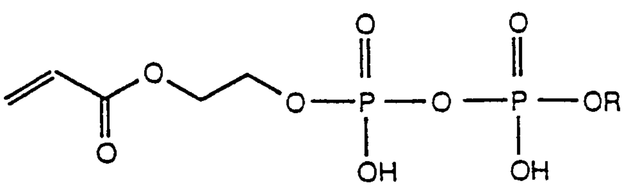

R :Isostearyl

(P-10)

Synthesis Example 11

2-Hydroxyethyl methacrylate (manufactured by Junsei Kagaku) was allowed to react with 1 mole of phosphorus pentoxide ($P_2O_5$,manufactured by Junsel Kagaku) per 2 moles of the methacrylate, to obtain a liquid phosphorus compound (P-11: 1,3-bis(2-methacryloxyethyl)-1,3-dihydrogen diphosphate having the following structural formula.

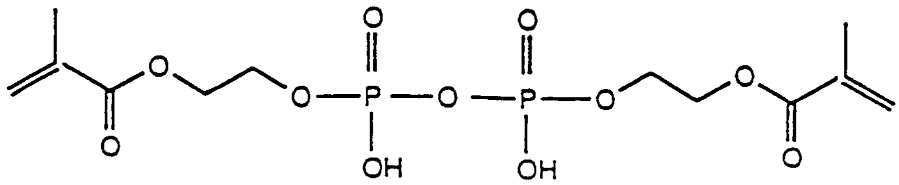

(P-11)

Test Example 1

The following tests were carried out using as surface modifiers the compounds (P-1 - 11) obtained in the above synthesis examples.

In this instance, the following surface modifiers were used for the purpose of comparison. That is, tetraoctylbis(ditridecylphosphite) titanate ("KR 46B", manufactured by Ajinomoto), vinyltrimethoxysilane ("A-171", manufactured by Nippon Unicar), $\gamma$-methacryloxypropyltrimethoxysilane ("A-174", manufactured by Nippon Unicar), dioctyl phosphate ("DOP", manufactured by Tokyo Kasei), monoisodecyl acid phosphate ("AP-10", manufactured by Daihachi Kagaku), diallyl phosphate ("DAP", obtained by allowing phosphorus oxychloride to react with 2 moles of allyl alcohol per 1 mole of the oxychloride and an excess amount of water in the presence of pyridine), di(acryloyloxyethyl) acid phosphate ("MR-200", manufactured by Daihachi Kagaku), dimethacryloxyethyl phosphate ("DMEP"), monomethacryloxyethyl phosphate (MMEP), methacrylic phosphoric ester ("JPA 514", manufactured by Johoku Kagaku), alkyl phosphoric ester ("phosphanol RS-710", manufactured by Toho Kagaku), and a mixture of 0.5 weight part of methacrylic phosphoric ester ("JPA 514", manufactured by Johoku Kagaku) and 0.5 weight part of an alkyl phosphoric ester ("phosphanol RS-710", manufactured by Toho Kagaku) were subjected to the tests.

Test (a):

One weight part of a surface modifier and also 100 weight parts of heavy $CaCO_3$ (manufactured by Sankyo Seifun) were added to 200 weight parts of toluene, the resulting mixture was stirred at room temperature for 10 minutes, and then the toluene was distilled off at 60 °C under reduced pressure to obtain a treated powder (surface-treated filler). After mixing 100 weight parts of the treated powder with 100 weight parts of an unsaturated polyester ("Polymal 9305Z", manufactured by Takeda Chemical Industries) and 0.7 weight part of a curing catalyst ("Perbutyl O" manufactured by Nippon Oil & Fats; t-butyl peroxy-2-ethyl hexanoate), the mixture was kneaded for 5 minutes using a kneader and checked on its viscosity using a B type (Brookfield) viscometer (25 °C).

This was cast in a silicone rubber mold of the dumbbell No. 2 specimen and heat cured at 80 °C for 1 hour. After storing the thus molded product in a desiccator at room temperature for 2 days, the tensile strength was measured ("RTM-500" tester manufactured by Orientec). The results are shown in Table 1 below.

Test (b):

One weight part of a surface modifier and also 100 weight parts of $Al(OH)_3$ (manufactured by Showa Denko) were added to 200 weight parts of toluene, the resulting mixture was stirred at room temperature for 10 minutes, and then the toluene was distilled off at 60 °C under reduced pressure to obtain a treated powder. After mixing 100 weight parts of the treated powder with 100 weight parts of acrysyrup ("SY-430", manufactured by Mitsubishi Rayon) and 0.7 weight part of a curing catalyst ("Perbutyl O" manufactured by Nippon Oil & Fats), the mixture was kneaded for 30 minutes using a propeller mixer and checked on its viscosity using a B type viscometer (25 °C).

This was cast in a silicone rubber mold of the dumbbell No. 2 specimen and heat cured at 80 °C for 1 hour. After storing the thus molded product in a desiccator at room temperature for 2 days, the tensile strength was measured ("RTM-500" manufactured by Orientec). The results are shown in Table 2 below.

Table 1

| Surface modifier | Viscosity (cps) | Tensile strength ($kg/cm^2$) |
|---|---|---|
| Inventive examples | | |
| P-1 | 280 | 1.25 |
| P-2 | 275 | 1.20 |
| P-3 | 290 | 1.18 |
| P-4 | 305 | 1.15 |
| P-5 | 255 | 1.13 |
| P-6 | 325 | 1.11 |
| P-7 | 305 | 1.29 |
| P-8 | 295 | 1.28 |
| P-9 | 260 | 1.16 |
| P-10 | 250 | 1.10 |
| P-11 | 340 | 1.08 |
| Comparative examples | | |
| KR 46B | 410 | 0.70 |
| A-171 | 915 | 0.46 |
| A-174 | 670 | 0.64 |
| DOP | 410 | 0.42 |
| AP-10 | 915 | 0.55 |
| DAP | 670 | 0.73 |
| MR-200 | 410 | 0.80 |
| DMEP | 635 | 0.79 |
| MMEP | 650 | 0.67 |
| RS-710 | 670 | 0.80 |
| JPA-514 | 380 | 0.39 |
| RS/710 + JPA-514 | 420 | 0.82 |
| none | 620 | 0.59 |

Table 2

| Surface modifier | Viscosity (cps) | Tensile strength ($kg/cm^2$) |
|---|---|---|
| Inventive examples | | |
| P-1 | 25 | 1.72 |
| P-2 | 28 | 1.81 |
| P-3 | 21 | 1.76 |
| P-4 | 31 | 1.69 |
| P-5 | 22 | 1.67 |
| P-6 | 24 | 1.70 |
| P-7 | 30 | 1.83 |
| P-8 | 27 | 1.73 |
| P-9 | 24 | 1.79 |
| P-10 | 22 | 1.64 |
| P-11 | 35 | 1.59 |
| Comparative examples | | |
| KR 46B | 50 | 0.80 |
| A-171 | 59 | 1.12 |
| A-174 | 65 | 1.20 |
| DOP | 54 | 0.71 |
| AP-10 | 59 | 0.68 |
| DAP | 65 | 1.05 |
| MR-200 | 62 | 1.25 |
| DMEP | 55 | 1.22 |
| MMEP | 58 | 1.08 |
| RS-710 | 57 | 1.13 |
| JPA-514 | 39 | 0.69 |
| RS/710 + JPA-514 | 45 | 1.22 |
| none | 59 | 0.81 |

Effects of the Invention

The surface modifiers of the present invention not only can increase rigidity of unsaturated polyester resins and acrylic resins filled with fillers such as carbonates, aluminium hydroxide and the like, but also can sharply reduce viscosity of such resins before curing, thus resulting in the improved processability and high filling capacity.

## Claims

1. A filler surface modifier which comprises as an active ingredient at least one compound selected from (1) a phosphoric ester compound having groups represented by the following general formulae (I) and (III) in one molecule, (2) a phosphoric ester compound having groups represented by the following general formulae (II) and (III) in one molecule, (3) a pyrophosphoric ester compound having groups represented by the following general formulae (I) and (III) in one molecule, (4) a pyrophosphoric ester compound having groups represented by the following general formulae (II) and (III) in one molecule, (5) a pyrophosphoric ester compound having groups represented by the following general formulae (I) and (IV) in one molecule, (6) a pyrophosphoric ester compound having groups represented by the following general formulae (II) and (IV) in one molecule, (7) a phosphoric ester compound having groups represented by the following general formulae (I) and (IV) in one molecule and 2 phosphorus atoms in the molecule, and (8) a phosphoric ester compound having groups represented by the following general formulae (II) and (IV) in one molecule and 2 phosphorus atoms in the molecule:

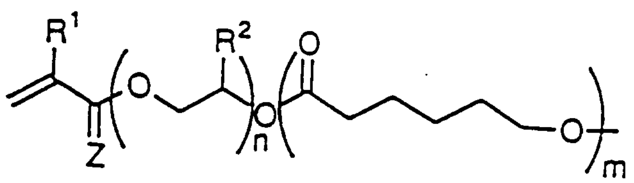

(I)

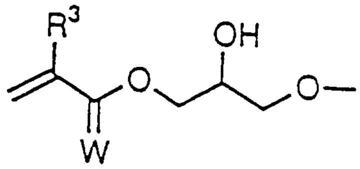

(II)

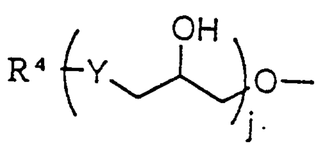

(III)

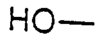

(IV)

wherein each of $R^1$ and $R^2$ independently represents H or $CH_3$, $R^3$ represents H or $CH_3$, $R^4$ represents an aryl group or a straight chain or branched chain alkyl group having 1 to 20 carbon atoms, Z represents O or $H_2$, W represents O or $H_2$, Y represents O, $CO_2$ or $CH_2$, n is an integer of 0 to 20, m is an integer of 0 to 10 and j is 0 or 1, with the proviso that n = 1 - 20 when Z is O and m = 0, n = 1 when Z is O and m = 1 - 10, n = 0 - 20 when Z is $H_2$ and m = 0, and n = 0 when Z is $H_2$ and m = 1 - 10.

2. The filler surface modifier of Claim 1 wherein said compounds (1) and (2) are phosphoric ester compounds represented by the following general formula (A):

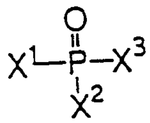

(A)

wherein each of $X^1$ to $X^3$ independently represents a group represented by the aforementioned general formula (I), (II), (III) or (IV).

**3.** The filler surface modifier of Claim 2 wherein said compounds (1) and (2) invariably contain an additional group represented by the formula (IV).

**4.** The filler surface modifier of Claim 1 wherein said compounds (3), (4), (5) and (6) are pyrophosphoric ester compoundsrepresented by the following general formula (B):

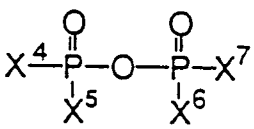

(B)

wherein each of $X^4$ to $X^7$ independently represents a group represented by the aforementioned general formula (I), (II), (III) or (IV).

**5.** The filler surface modifier of Claim 4 wherein said compounds (3) and (4) invariably contain an additional group represented by the formula (IV).

**6.** The filler surface modifier of Claim 1 wherein said compounds (1), (2), (7) and (8) are phosphoric ester compounds represented by the following general formula (C):

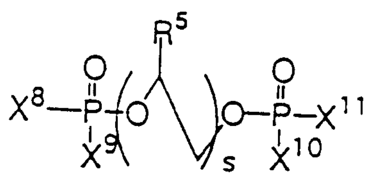

(C)

wherein $R^5$ represents H or $CH_3$, s is an integer of 1 to 20, and each of $X^8$ to $X^{11}$ independently represents a group represented by the aforementioned general formulae (I), (II), (III) or (IV).

**7.** The filler surface modifier of any one of Claims 1 to 3 wherein said phosphoric ester compound (A) is a compound which has been obtained by reacting phosphorus oxychloride with q moles of water ($H_2O$), p moles of a compound represented by the following general formula (D) and (3 - p - q) moles of a compound represented by the following general formula (E), each per 1 mole of the oxychloride, followed by reaction with r moles of a compound represented by the following general formula (F) (provided that p, q and r respectively satisfy $0 < p \leqq 3$, $0 \leqq q < 3$, $0 < p + q \leqq 3$ and $0 \leqq r \leqq q$):

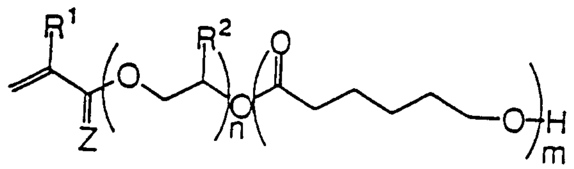

(D)

$R^6OH$

(E)

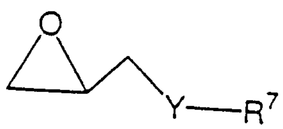

(F)

wherein each of $R^1$ and $R^2$ independently represents H or $CH_3$, Z represents O or $H_2$, n is an integer of 0 to 20, m is an integer of 0 to 10, $R^6$ represents an aryl group, a straight chain or branched chain alkyl group having 1 to 20 carbon atoms, a 3-alkoxy-2-hydroxypropyl group or a 3-allyloxy-2-hydroxypropyl group, $R^7$ represents a straight chain or branched chain alkyl group having 1 to 20 carbon atoms, an aryl group, an allyl group, a 2-methylallyl group, a methacryloyl group or an acryloyl group, and Y represents O, $CH_2$ or OCO, with the proviso that n = 1 - 20 when Z is O and m = 0, n = 1 when Z is O and m = 1 - 10, n = 0 - 20 when Z is $H_2$ and m = 0, and n = 0 when Z is $H_2$ and m = 1 - 10, and $R^7$ is none of allyl, 2-methylallyl, methacryloyl and acryloyl groups when Y is $CH_2$ or OCO.

**8.** The filler surface modifier of Claim 1, 4 or 5 wherein said pyrophosphoric ester compound (B) is a compound which has been obtained by reacting phosphorus pentoxide with u moles of a compound represented by the following general formula (D) and (2 - u) moles of a compound represented by the following general formula (E), each per 1 mol of the pentoxide, followed by reaction with v moles of a compound represented by the following general formula (F) (provided that u and v respectively satisfy $0 < u \leqq 2$ and $0 \leqq v \leqq 2$), or by mixing a reaction product which has been obtained by allowing phosphorus oxychloride to react with (3 - a - b - c) moles of water ($H_2O$), a moles of a compound represented by the following general formula (D), b moles of a compound represented by the following general formula (E) and c moles of a compound represented by the following general formula (H), each per 1 mol of the oxychloride, and a reaction product which has been obtained by allowing phosphorus oxychloride to react with (3 - d - e - f) moles of water ($H_2O$), d moles of a compound represented by the following general formula (D), e moles of a compound represented by the following general formula (E) and f moles of a compound represented by the following general formula (H), each per 1 mol of the oxychloride, followed by removal of water ($H_2O$) per 1 mole of the oxychloride using a dehydrating agent (provided that a to f respectively satisfy $1 \leqq a + b + c \leqq 2$, $0 < a + d \leqq 2$, $1 \leqq d + e + f \leqq 2$, $0 \leqq b < 2$, $0 \leqq c < 2$, $0 \leqq d < 2$ and $0 \leqq f < 2$):

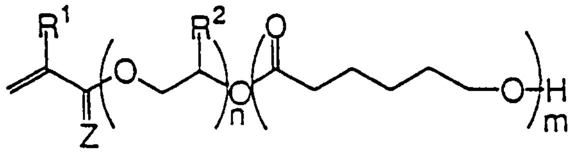

(D)

$R^6OH$ (E)

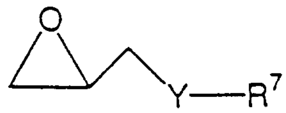

(F)

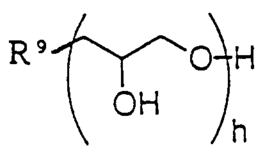

(H)

wherein each of $R^1$ and $R^2$ independently represents H or $CH_3$, Z represents O or $H_2$, n is an integer of 0 to 20, m is an integer of 0 to 10, $R^6$ represents an aryl group, a straight chain or branched chain alkyl group having 1 to 20 carbon atoms, a 3-alkoxy-2-hydroxypropyl group or a 3-allyloxy-2-hydroxypropyl group, $R^7$ represents a straight chain or branched chain alkyl group having 1 to 20 carbon atoms, an aryl group, an allyl group, a 2-methylallyl group, a methacryloyl group or an acryloyl group, Y represents O, $CH_2$ or OCO, $R^9$ represents a straight chain or branched chain alkyloxy group having 1 to 20 carbon atoms, an aryloxy group, an allyloxy group, a 2-methylallyl group, a methacryloyl group or an acryloyl group, and h is 0 or 1, with the proviso that n = 1 - 20 when Z is O and m = 0, n = 1 when Z is O and m = 1 - 10, n = 0 - 20 when Z is $H_2$ and m = 0, and n = 0 when Z is $H_2$ and m = 1 - 10, and $R^7$ is none of allyl, 2-methylallyl, methacryloyl and acryloyl groups when Y is $CH_2$ or OCO.

**9.** The filler surface modifier of Claim 1 or 6 wherein said phosphoric ester compound (C) is a compound which has been obtained by reacting phosphorus oxychloride with y moles of water, x moles of a compound represented by the following general formula (D), (2 - x - y) moles of a compound represented by the following general formula (E) and 0.5 moles of ethylene glycol, propylene glycol, polyethylene glycol or polypropylene glycol represented by the following general formula (G), each per 1 mole of the oxychloride, followed by reaction with z moles of a compound represented by the following general formula (F) (provided that x, y and z respectively satisfy $0 < x \leqq 2$, $0 \leqq y < 2$, $0 < x + y \leqq 2$ and $0 \leqq z \leqq y$):

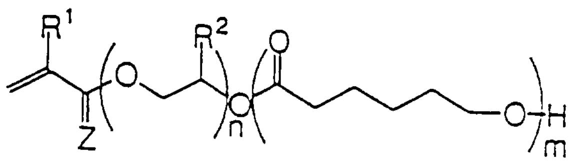

(D)

$R^6OH$ (E)

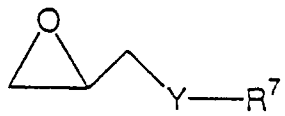

(F)

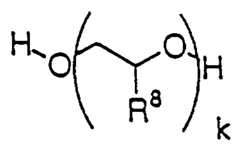

(G)

wherein each of $R^1$ and $R^2$ independently represents H or $CH_3$, Z represents O or $H_2$, n is an integer of 0 to 20, m is an integer of 0 to 10, $R^6$ represents an aryl group, a straight chain or branched chain alkyl group having 1 to 20 carbon atoms, a 3-alkoxy-2-hydroxypropyl group or a 3-allyloxy-2-hydroxypropyl group, $R^7$ represents a straight chain or branched chain alkyl group having 1 to 20 carbon atoms, an aryl group, an allyl group, a 2-methylallyl group, a methacryloyl group or an acryloyl group, Y represents O, $CH_2$ or OCO, $R^8$ represents H or $CH_3$, and k is an integer of 1 to 20, with the proviso that n = 1 - 10 when Z is O and m = 0, n = 1 when Z is O and m = 1 - 10, n = 0 - 20 when Z is $H_2$ and m = 0, and n = 0 when Z is $H_2$ and m = 1 - 10, and $R^7$ is none of allyl, 2-methylallyl, methacryloyl and acryloyl groups when Y is $CH_2$ or OCO.

**10.** A surface treated filler the surface of which has been treated with 0.1 to 20% by weight (based on the untreated filler) of any one of the filler surface modifiers of Claims 1 to 9.

**11.** An unsaturated polyester resin composition which comprises 100 weight parts of an unsaturated polyester, 30 to 300 weight parts of the surface-treated filler of Claim 10, and 0.5 to 5 weight parts of a curing catalyst.

**12.** An acrylic resin composition which comprises 100 weight parts of an acrylic resin, 30 to 300 weight parts of a surface-treated filler of Claim 10, and 0.5 to 5 weight parts of a curing catalyst.

**13.** A compound represented by the following general formula (Aa):

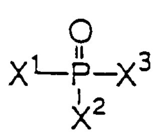

(A a)

wherein each of $X^1$ to $X^3$ independently represents a group represented by the following general formulae (Ia), (IIa), (IIIa) or (IVa), said compound containing (a) at least groups represented by the following general formulae (Ia), (IIIa) and (IVa) in one molecule or (b) at least groups represented by the following general formulae (IIa), (IIIa) and (IVa) in one molecule;

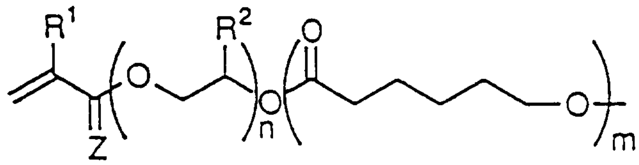

(I a)

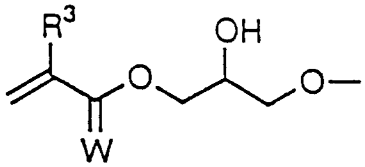

(I I a)

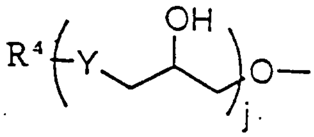

(I I I a)

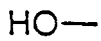

(I V a)

wherein each of $R^1$ and $R^2$ independently represents H or $CH_3$, $R^3$ represents H or $CH_3$, $R^4$ represents an aryl group or a straight chain or branched chain alkyl group having 1 to 20 carbon atoms, Z represents O or $H_2$, W represents O or $H_2$, Y represents O, $CO_2$ or $CH_2$, n is an integer of 0 to 20, m is an integer of 0 to 10, and j is 1, with the proviso that n = 1 - 20 when Z is O and m = 0, n = 1 when Z is O and m = 1 - 10, n = 0 - 20 when Z is $H_2$ and m = 0, and n = 0 when Z is $H_2$ and m = 1 - 10.

**14.** A compound represented by the following general formula (Ba):

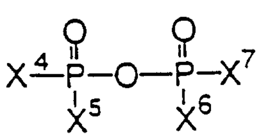

(B a)

wherein each of $X^4$ to $X^7$ independently represents a group represented by the aforementioned general formula (Ia), (IIa), (IIIa) or (IVa), said compound containing (a) at least groups represented by the aforementioned general formulae (Ia), (IIIa) and (IVa) in one molecule or (b) at least groups represented by the aforementioned general formulae (IIa), (IIIa) and (IVa) in one molecule.

European Patent Office

# EUROPEAN SEARCH REPORT

Application Number
EP 94 11 6571

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | CHEMICAL ABSTRACTS, vol. 081, no. 14, 7 October 1974, Columbus, Ohio, US; abstract no. 081241, HOSODA M 'Metal surface treatment' * abstract * & JP---7 402 266 (HOSODA SHIKIZAI KENKYUSH) 19 January 1974 --- | 1-13 | C09C3/08 C08K9/04 C07F9/09 |
| X | CHEMICAL ABSTRACTS, vol. 102, no. 5, 4 February 1985, Columbus, Ohio, US; abstract no. 046139, 'Organic phosphoric acid esters' * abstract * & JP-A-84 141 588 (NIPPON KAYAKU CO., LTD.;JAPAN ) 14 August 1984 --- | 1-13 | |
| X | CHEMICAL ABSTRACTS, vol. 098, no. 16, 18 April 1983, Columbus, Ohio, US; abstract no. 132384, 'Adhesives for human hard tissues' * abstract * & JP-A-82 164 171 (SANKIN INDUSTRY CO., LTD.;JAPAN ) 8 October 1982 --- | 1-12,14 | TECHNICAL FIELDS SEARCHED (Int.Cl.6) C09C C07F C08K |
| D,Y | CHEMICAL ABSTRACTS, vol. 098, no. 4, 24 January 1983, Columbus, Ohio, US; abstract no. 017537, 'Surface modification of inorganic fillers for thermoplastic resins' * abstract * & JP-A-82 108 164 (SHIRAISHI CHUO KENKYUSHO K. K.;JAPAN ) 6 July 1982 --- -/-- | 1-14 | |

The present search report has been drawn up for all claims

| Place of search | Date of completion of the search | Examiner |
|---|---|---|
| THE HAGUE | 7 March 1995 | Beslier, L |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

European Patent Office

# EUROPEAN SEARCH REPORT

Application Number
EP 94 11 6571

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
| --- | --- | --- | --- |
| D,Y | CHEMICAL ABSTRACTS, vol. 116, no. 2, 13 January 1992, Columbus, Ohio, US; abstract no. 007378, OKADA K ET AL 'Surface-treated powder as fillers for plastics' * abstract * & JP-A-9 195 269 (KURARAY CO., LTD.;JAPAN ) 19 April 1991 --- | 1-14 | |
| D,Y | US-A-5 079 279 (TAKAO HAYASHI) * the whole document * --- | 1-14 | |
| Y | EP-A-0 333 503 (KURARAY CO. LTD.) * the whole document * --- | 1-14 | |
| Y | EP-A-0 115 948 (KURARAY CO. LTD.) * the whole document * --- | 1-14 | |
| A | EP-A-0 013 142 (STAUFFER CHEMICAL CO.) * the whole document * ----- | 1-14 | TECHNICAL FIELDS SEARCHED (Int.Cl.6) |

The present search report has been drawn up for all claims

| Place of search | Date of completion of the search | Examiner |
| --- | --- | --- |
| THE HAGUE | 7 March 1995 | Beslier, L |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document